# EUROPEAN PATENT APPLICATION

(11) **EP 2 842 406 A1**
(43) Date of publication of application: **04.03.2015**
(21) Application number: 14182704.8
(22) Date of filing: 28.08.2014
(51) Int. Cl.: A01D 34/416, C08G 69/36, C08L 101/16

(54) **Biodegradable Nylon and Method for the Manufacture Thereof**

(30) Priority: 29.08.2013 US 201361871397 P
(71) Applicant: Nylon Corporation Of America, Inc., Manchester, New Hampshire 03103 (US)
(72) Inventor: Davies, Jack, Houma, LA Louisiana 70360 (US); Biederman, Gregory J., Manchester, NH New Hampshire 03103 (US); Coco, Christopher, Salem, NH New Hampshire 03079 (US)
(74) Representative: Sanderson & Co.

(57) **Abstract**

A method for the preparation of a biodegradable polyamide-based composition comprising glycine substantially uniformly dispersed into a polyamide matrix, the method comprising: first mixing more than 2 weight percent glycine, at least one polyamide-producing monomer, and optionally water or other additives, to form a suspension wherein the glycine is substantially uniformly dispersed therein; then polymerizing the at least one polyamide-producing monomer with the glycine substantially uniformly dispersed *in situ* to provide a polyamide matrix wherein the glycine remains substantially uniformly dispersed in the resulting polyamide matrix to form the biodegradable polyamide-based composition.

## Description

The present invention relates to a polyamide resin, also known as nylon, having environmentally advantageous biodegradable properties. More particularly, the present invention relates to a method of preparing a polyamide-based composition copolymerized with an adjuvant with biological activity or bioactive ingredient, for example an amino acid such as glycine, in order to provide film, strands, filaments, or injection molded parts that are biodegradable. The invention is particularly suitable for use in products such as trimmer line where biodegradability is desired so as to minimize deleterious effects on the environment.

The polymer of the invention is suitable as trimmer line, which is widely used in rotary head motorized devices such as vegetation, brush, or grass trimmers to clear outdoor areas of unwanted vegetation by severing the grass, weeds, and plants. Problems associated with traditional trimmer line use are debris, strands, and particles of the trimmer line itself being left behind in the environment that does not biodegrade in reasonable time frames.

The prior art discloses that plastics or polymeric materials such as trimmer line are not biodegradable, and thus not environmentally friendly. Plastics are versatile materials known to be lightweight, low cost, extremely durable, and relatively unbreakable. The durability and strength of plastics mean that they are difficult to dispose of and tend to persist in the environment for extremely long periods of time. Because conventional plastics are typically composed of petroleum based materials, e.g., polythene and polypropylene, plastics are resistant to biodegradation leading to solid waste in landfills that are harmful to the natural environment.

Various attempts have been made to overcome this problem, including as disclosed in International Application No. WO 2013/057748 A1, wherein a biodegradable polymeric material was produced containing polyamide 6, copolyamide 6/66, and an organoleptic-organic cultured colloids/natural fiber as a biodegradability promoting additive. The additive is disclosed as proprietary material ECM Masterbatch Pellets® sold by ECM Biofilms. The material disclosed in WO 2013/057748 A1 is believed to be sold commercially as Biofil™.

Similarly, U.S. Patent Appl. No. 2013/0011906 A1 discloses an additive to enhance biodegradability in plastics and is believe to be sold commercially as EcoPure, compatible with various types of plastics including the following: HDPE, LDPE, LLDPE, PET, PETG, PP, GPPS, HIPS, Nylon, PVC, EVOH, and Polycarbonate. The additive may include a positive chemotaxis to attract microbes, such as a sugar or a furanone, and suitable microbes to initiate degradation. The microbes and furanone material may be encapsulated to facilitate controlled release.

U.S. Pat. No. 7,928,180 discloses a biodegradable polymer without water solubility but with moldabilty. The biodegradable polymer comprises a biodegradable unit and an imine unit having one or more imine bonds.

U.S. Pat. No. 6,061,914 discloses cutting line core with biodegradable or photodegradable substance. For example, the core may comprise biodegradable substances such as a polycaprolactone-based biodegradable resin marketed by UNION CARBIDE under the trade name TONE POLYMERS® or photodegradable substances very sensitive to ultraviolet radiation such as rutile or anatase titanium oxide, or alternatively of cerium stearate, mixed as filler with a synthetic substance. The cutting line further comprising synthetic polyamide and polyurethane coating on said core.

Thus, the need continues to exist for an environmentally friendly, biodegradable polymer that is cost effective and need not be specially processed or encapsulated. Such a polymer would satisfy a long felt need for cost effective manufacturing of biodegradable polyamides suitable, for example, in the forming of trimmer line and other applications. The polymer of the invention is also suitable for fishing line or packaging products that when placed and/or discarded in the environment eventually leads to the biodegradation of said products. The polymer of this invention finds diverse applications including application in bristles, ropes, fabrics, fishing nets, automobile parts, etc.

One aspect of the present invention may be achieved by a method for the preparation of a biodegradable polyamide-based composition, the method comprising: first mixing more than 2 weight percent glycine, at least one polyamide-producing monomer, and optionally water or other additives, to form a suspension wherein the glycine is substantially uniformly dispersed therein; then polymerizing the at least one polyamide-producing monomer with the glycine substantially uniformly dispersed *in situ* to provide a polyamide matrix wherein the glycine remains substantially uniformly dispersed in the resulting polyamide matrix to form the biodegradable polyamide-based composition.

In one embodiment, the method includes the step of mixing comprising first mixing the at least one polyamide-producing monomer with water to form a reaction mixture and then adding glycine to the reaction mixture to form a suspension before commencement of polymerization.

In another embodiment, the method includes the step of mixing comprising first mixing the glycine with water to solubilize the glycine to form a glycine/water mixture, and then mixing the at least one polyamide-producing monomer with the glycine/water mixture to form a suspension before commencement of polymerization.

It will be appreciated that any known monomer suitable for producing polyamide when polymerized may be used in the present invention. In one or more embodiments herein, the method(s) includes that at least one polyamide-producing monomer is selected from caprolactam, 11-amino undecanoic acid, laurolactam, or mixtures thereof. In a preferred embodiment, the at least one polyamide-producing monomer is caprolactam.

In one or more embodiments herein, the method(s) includes that at least one polyamide-producing monomer is selected from hexamethylenediamine and a second polyamide-producing monomer is selected from adipic acid, azelaic acid, sebacic acid, and dodecanedioic acid.

The at least one polyamide-producing monomer may be selected from any number of diamines and any number of diacids sufficient to produce a polyamide copolymer.

Glycine is a bioactive ingredient. In one or more embodiments, the glycine may be crystalline.

The composition may be substantially devoid of water or other additives.

In one or more embodiments herein, the biodegradable polyamide-based composition may be extruded to form a filament.

In one embodiment, the method includes the filament being biodegradable trimmer line.

The biodegradable polyamide-based composition can be formed into any desired product by any of a number of different methods. According to another aspect of the present invention there is provided a biodegradable nylon trimmer line extruded from a polyamide-based composition prepared by any of the described methods of the present invention.

In other or the same embodiments, the biodegradable polyamide-based composition may be formed into monofilament, typically by well known extrusion methods.

All advantages of the present invention will become better understood with regard to the following description, appended claims, and accompanying drawings wherein:
Fig. 1A shows the polymerization of a biodegradable polyamide-based composition prepared according to the present invention;
Fig. 1B shows the production of a product such as trimmer line according to the present invention;
Fig. 2 is a representative graph comparing trimmer performance of trimmer line according to the present invention that was placed outdoors, i.e., exposed to the environment, for a year versus trimmer line according to the present invention that was left indoors (i.e., not exposed to the environment) for a year;
Fig. 3 is a representative graph showing the tensile strength of an injection molded bar made according to the present invention that was left outside (i.e., exposed to composting conditions) over a period of 0 to 365 days;
Fig. 4 is a representative graph showing the tensile strength of an injection molded bar made according to the present invention that was left outside (i.e., exposed to composting conditions) over a period of 0 to 365 days;
Fig. 5 is a representative graph showing the trimmer performance of trimmer line according to the present invention that was left outside (i.e., exposed to composting conditions) over a period of 0 to 60 to 210 days; and
Fig. 6 is a representative graph showing the trimmer performance of a control trimmer line not made according to the present invention that was left outside (i.e., exposed to composting conditions) over a period of 0 to 60 to 210 days.

Biodegradation is defined as any physical or chemical change in a material caused by any environmental factor, including light, heat, moisture, wind, chemical conditions, or biological activity. By definition biodegradable polymers are degraded into carbon dioxide, water, and biomass as a result of the action of living organism or enzymes. An adjuvant with biological activity is defined herein as an ingredient that modifies the action of the principal ingredient and may be interchangeably referred to herein as a bioactive ingredient.

The present invention relates to the production of a biodegradable polyamide-based (nylon polymer) composition that includes at least one bioactive ingredient that is substantially uniformly dispersed within the polyamide matrix. Such a polymer composition, when made or formed in products, has been found to have higher biodegradability than other polymer compositions that do not incorporate at least one bioactive ingredient. In one or more embodiments, the at least one bioactive ingredient is an amino acid. In one or more embodiments, the at least one bioactive ingredient is glycine.

More particularly, the present invention overcomes the problem of polymers inability to timely biodegrade by mixing glycine and, optionally, water and/or other additives, prior to or during polymerization of the polyamide-producing monomers. That is, the present invention mixes the glycine and, optionally, water and/or other additives, with one or more polyamide-producing monomers pre-polymerization to provide a liquid suspension that can be *in situ* polymerized and, optionally, pelletized and dried, to form a biodegradable polyamide matrix. Because glycine and, optionally, water and/or other additives, are added and substantially uniformly dispersed with the polyamide matrix before polymerization or as polymerization occurs (i.e., before or during polymerization = pre-polymerization), the glycine (and water and/or other additives, when added) have been found to remain substantially uniformly dispersed within the resultant polymer matrix that forms the biodegradable polyamide-based composition.

Furthermore, products made from the biodegradable polyamide-based composition of the present invention have been found to inherently possess higher biodegradability than other polyamide compositions polymerized without glycine. Thus, the biodegradable polyamide-based compositions of the present invention made from the above described process have been found to be particularly useful in products where high biodegradability is desirable. Such products made from the polyamide-based composition of the present invention include, but are not limited to, extruded parts, compounded parts, casted parts, molded parts, films, filaments, fibers, jackets and sheaths. More particularly, biodegradable compositions of the present invention are believed to be particularly useful in, but limited to, trimmer line in vegetation trimmers. In at least one embodiment of the present invention, the resultant biodegradable polymer matrix or composition exhibit biodegradation to microbes present in soil.

The proposed mechanism for this phenomenon is the substantially homogeneous disbursement of glycine throughout the polyamide matrix. Without being bound by theory, it is believed that by creating a biodegradable polymer with bioactive ingredient glycine dispersed throughout, the mechanism for biodegradation is enhanced wherein the contact points of the polymeric surface in contact with microbes in the soil would be greatly enhanced, thereby, increasing rate of degradation. Once there are structured communities of microorganisms interacting to produce schisms in the long hydrocarbon chains of the polymers the process continues until all the hydrocarbons are eventually transformed into carbon dioxide and water (aerobic biodegradation) or carbon dioxide, methane, and water (anaerobic biodegradation).

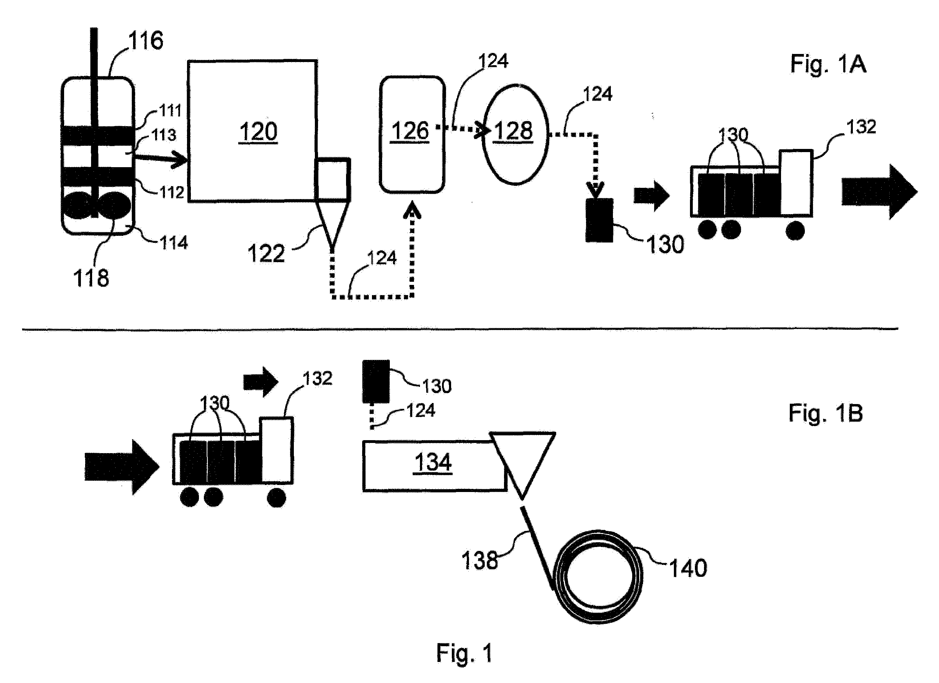

With regard to the Figures, Fig. 1, a schematic representation of the approach to the production of biodegradable polyamide-based compositions of the present invention (Fig. 1A) and products made from biodegradable polyamide-based compositions of the present invention (Fig. 1B), is depicted. In Fig. 1A, a method for the preparation of a polyamide-based composition is depicted, wherein glycine 111 and, optionally at least one other additive 113, are mixed with at least one polyamide-producing monomer 112, and optionally water 114, in a reaction mixing vessel 116, typically provided with a stirrer 118 to form a reaction mixture. More particularly, the at least one polyamide-producing monomer 112 may be optionally mixed with water 114 to form a reaction mixture. Then, glycine 111 may be added to the reaction mixture to form a suspension. Notably, the resultant suspension is mixed so that the glycine is substantially uniformly dispersed in the polyamide-producing monomer and water reaction mixture. Alternatively, the at least one polyamide-producing monomer 112 may be mixed with glycine 111 and optionally water 114, wherein the ingredients are added all at once or simultaneously to form a reaction mixture.

In one or more embodiments, glycine 111 is added directly to the at least one polyamide-producing monomer 112 as the glycine is soluble on its own in the molten monomer (such as caprolactam). In one or more embodiments, the biodegradable polyamide-based composition of the present invention is advantageously devoid of water 114 and/or other additives 113. In other or same embodiments, the biodegradable polyamide-based composition of the present invention includes low concentrations or "advantageous water" 114 to catalyze the reaction.

It is further noted that optional water or other additives are not required. In one or more embodiments, the biodegradable polyamide-based composition of the present invention is substantially devoid of added water 114. In one or more embodiments, the biodegradable polyamide-based composition of the present invention is substantially devoid of other additives 113.

Once mixed, the suspension of substantially uniformly dispersed ingredients is then subjected to polymerization as shown at 120 such that the polyamide producing monomer is converted to a biodegradable polyamide matrix. Thus, all glycine and any other additives, if added, are added prior to polymerization (i.e., pre-polymerization) of the polyamide-producing monomer. Upon polymerization, the resultant polyamide-based composition includes at least glycine, and if added, other additives, which remain substantially uniformly dispersed therein.

The resultant biodegradable polyamide-based composition may then be subjected to pelletizing as shown at 122 to provide pellets of polyamide-based composition. The pellets, denoted by dotted line 124, may include residual polyamide-producing monomer. Typically, for trimmer line production residual or remainder monomer does not need to be extracted. However, for manufacture of packaging or parts, residual monomer may be subjected to extraction. Thus, the pellets 124 may be subject to extraction of the polyamide-producing monomer as shown at 126. Before extraction, the remainder monomer ranges from about 0.01 to 15%. To extract the residual monomer, the polyamide-based composition is moved to another reactor or vessel and then turned and tumbled with near boiling water (180 - 200°F) in order to leach out the residual monomer. This results in a polyamide-based composition with about 8% or less residual monomer. In one or more embodiments, the residual monomer after extraction to a level of 3 %. In other embodiments, the residual monomer after extraction is reduced to a level of less than 2%. In yet another embodiment, the residual monomer after extraction is 0.9% or less.

The pellets 124 may further be subjected to drying, as at 128, to lower the moisture level therein. In one embodiment, the pellets 124 may be dried to a moisture level of 1.8% or less. Once extracted and dried, the pellets 124 may be packaged, such as into container(s) 130, and shipped from the polymer manufacturer, as by a moving vehicle 132 capable of carrying the containers 130 of the pellets to a product manufacturer.

In Fig. 1B, the preparation of a product made from the biodegradable polyamide-based composition provided and schematically shown in Fig. 1A is shown. Specifically, upon receiving the shipment of containers 130 of pellets, the containers 130 may be removed from the moving vehicle 132 and opened. The pellets 124 may be removed from the container 130 and placed into a hopper (not shown) for further processing and formation into a product. In the formation of the biodegradable product, the pellets may be subsequently remelted and formed into a desired product. For example, in some cases, the product may be formed by extruding the pellets into an extruded product. In other cases, the product may be formed by compounding the pellets into a compounded product. In still other cases, the product may be formed by casting the pellets into a casted product. In yet other cases, the product may be formed by molding the pellets into a molded product. And in still other cases, the product may be formed by thermoforming the pellets into a thermoformed product. All of these cases are schematically represented by the machine 134 used to extrude, compound, cast, mold, or thermoform the product.

It will be appreciated that more than one of the product formation steps can be employed in subsequent steps. For example, the container(s) 130 of pellets 124 can be first shipped to a compound manufacturer who would take the pellets 124, remelt them, provide additional compounding additives, if desired, and repelletize the compounded product for further delivery to a further product manufacturer, who may then receive the compounded pelletized product for use in an extrusion or molding process by remelting the compounded pelletized product and making a new product 140 from the compounded pelletized product. Among the many uses for such biodegradable polyamide-based (also known as nylon-based) compositions of the present invention include the production of trimmer line.

### A. Monomers for Polymerizing Nylon (Polyamide)

Polymers bearing recurring amide groups in their backbone are defined as polyamides. Nylon is the generic name for a family of polyamide polymers characterized by the presence of an amine (-NH) group and an acid (-C=O) group within the monomer. The most basic chemical form of nylon is

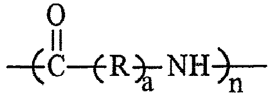

where R is any saturated or unsaturated, branched or unbranched, substituted or unsubstituted, aliphatic, cyclic or aromatic hydrocarbon and a and n separately equal any positive integer. This is considered an AB type nylon, the A referring to the acid and the B referring to the amine. Where a=6, caprolactam is produced as the monomer, nylon 6 being the polymer produced therefrom. Nylon 6 is a polymer obtained by ring-opening polymerization of ε caprolactam and has several commercial names including perlon, nylon, and steelon.

Other well known nylons of the AB type include nylon 11 and 12, wherein the numeral sets forth the number of primary carbons within the structure. More specifically, the polymerization of 11-amino undecanoic acid produces nylon 11, while the polymerization of laurolactam produces nylon 12.

In addition to the above nylons, other nylons are characterized by the use of diacids and diamines to produce a polymer having the general chemical structure 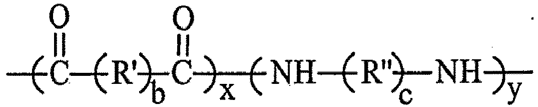 where R' and R" may be the same or different and, like R above, are any saturated or unsaturated, branched or unbranched, substituted or unsubstituted, aliphatic, cyclic or aromatic hydrocarbon, b and c are separately any positive integer, and x and y equals molar percent 1 to 99%. These AABB type nylons, i.e., those polyamides characterized by diamine and diacid monomers, are well known in the art. The most common of these types of nylons is nylon 6,6 (hexamethylenediammonium adipate) which includes a 6 carbon diamine (e.g., hexamethylenediamine) and a 6 carbon diacid monomer (e.g., adipic acid). Other such nylons include, *inter alia,* nylon 6,9, nylon 6,10, nylon 6,12, produced by the polymerization reaction of hexamethylenediamine with a diacid selected from azelaic acid (to make nylon 6,9), sebacic acid (to make nylon 6,10) or dedecanedioic acid (to make nylon 6,12).

Polymers of the AABB type having high molecular weights can be derived as condensation products from the reaction of fatty dibasic acids (e.g., C₁₈, C₁₉, C₂₁, and C₃₆) and di- and polyfunctional amines. For purposes of this disclosure, the term "fatty dibasic acid" will refer to any of the high molecular weight diacids of at least 15 primary carbon units. Examples include pentadecanedioic acid, commonly known to have 15 carbon units (C₁₅), and carboxystearic acid, commonly known to have 19 carbon units (C₁₉). A more complete description of fatty acids as they relate to the production of polyamides can be found in "Polyamides from Fatty Acids," Encyclopedia of Polymers. Vol. 11, pp. 476-89 (1988), which is incorporated herein by reference. Those skilled in the art will readily appreciate that a high molecular diacid, such C₁₈, can be changed into a high molecular diamine through known chemical reactions. Generally it is known in the art that nylon 6,36 and other fatty acid/diamine based polymers are not soluble in typical solvents such as water, these polymers must be polymerized with chain terminators and low molecular weight acids to increase solubility.

Polyamides, also referred to interchangeably herein as nylon or PA, suitable for use in the present invention include homopolymers nylon 6, nylon 6,6, nylon 6,9, nylon 6,10, nylon 11, nylon 12, as well as copolymers nylon 6/66, nylon 6/610, and nylon 6/12. Other copolymer examples may include nylon 66/610 or nylon 66/12. Non-limiting examples of polymers suitable in the present are listed in Table 1.

**Table 1: Polyamide-producing monomer(s)**

| **Polyamide** | **Polyamide-producing monomer(s)** |
|---|---|
| *Homopolymer* | |
| Nylon 6 or PA6 | ε-Caprolactam |
| Nylon 6,6 or PA 66 | hexamethylenediamine and adipic acid |
| Nylon 6,9 | Hexamethylenediamine and azelaic acid |
| Nylon 6,10 | Hexamethylenediamine with sebacic acid |
| Nylon 6,12 | hexamethylenediamine with dodecanedioic acid |
| Nylon 11 | 11-amino undecanoic acid |
| Nylon 12 | laurolactam |

| *Copolymer* | |
|---|---|
| PA 6/66 | caprolactam, hexamethylenediamine and adipic acid |
| PA 6/610 | caprolactam, hexamethylenediamine, and sebacic acid |
| Nylon 6/12 | caprolactam and laurolactam |
| Nylon 66/610 | hexamethylenediamine, adipic acid and sebacic acid |
| Nylon 66/12 | laurolactam, hexamethylenediamine, adipic acid |

It will be appreciated that any known monomer suitable for producing a polyamide when polymerized may be used in the present invention.

In some embodiments of the present invention, the at least one polyamide-producing monomer may be selected from caprolactam, 11-amino undecanoic acid, and laurolactam so as to produce nylon 6, nylon 11 and nylon 12, respectively. In one or more embodiments, the at least one polyamide-producing monomer is selected from caprolactam, 11-amino undecanoic acid, laurolactam, or mixtures thereof.

In one or more embodiments, polyamides for use in the present invention include: Nylon 6, also known as Polyamide 6 or PA6. Nylon-6 is made from a single monomer called caprolactam, also known as 6-amino-caproic acid or ε-Caprolactam. In one or more embodiments, the at least one polyamide-producing monomer is caprolactam. Other names for caprolactam, which may be used interchangeably herein, include ε-Caprolactam; 1-Aza-2-cycloheptanone; 2-Azacycloheptanone; Capron PK4; Cyclohexanone iso-oxime; Extrom 6N; Hexahydro-2-azepinone; Hexahydro-2H-azepin-2-one (9Cl); and Hexanolactame.

In other embodiments, the at least one polyamide-producing monomers includes at least two monomers wherein hexamethylenediamine (HMD) is reacted with an acid selected from adipic acid (to produce nylon 6,6), azelaic acid (to produce nylon 6,9), sebacic acid (to produce nylon 6,10), and dodecanedioic acid (to produce nylon 6,12).

In other embodiments, the polyamide-producing monomers may be made into polyamide copolymers by the addition of caprolactam (or lauralactam, where nylon 12 is desired as one of the blocks) with the hexamethylenediamine and one of the acid above. Such copolymers would include nylon 6/66 (with adipic acid), nylon 6/69 (with azelaic acid), nylon 6,/610 (with sebacic acid) and nylon 6/612 (with dodecanedioic acid). In still another embodiment, caprolactam may be copolymerized with laurolactam to produce nylon 6/12. In the present invention, any diamine can essentially be added with any diacid to produce a polyamide matrix suitable for the present invention. Likewise, at least one polyamide-producing monomer can be selected from any number of diamines (typically at least one) and any number of diacids (typically at least two) sufficient to produce a polyamide copolymer.

In other embodiments, the at least one polyamide-producing monomer is selected from hexamethylenediamine, adipic acid, azelaic acid, sebacic acid, 12-carbon dibasic (dodecanedioic) acid, caprolactam, or mixtures thereof, or mixtures with caprolactam or laurolactam, to produce copolymers.

### B. Bioactive Ingredient

In one or more embodiments herein of the present invention, the bioactive ingredient is an amino acid. In other or the same embodiments herein, the amino acid is glycine. Glycine, chemical formula C₂H₅NO₂ and molecular weight 75.07 g/mol, is a white, crystalline material that is inexpensive and readily available. Other names for glycine, which may be used interchangeably herein, include Aminoacetic acid; 2-Aminoacetic acid; Aciport; Aminoethanoic acid; Glicoamin; Glycocoll; Glycolixir; Glycosthene; Hampshire glycine; and Padil.

In other or the same embodiments herein, more than 1 wt.% of glycine is loaded or mixed with the polyamide-producing monomer. In other embodiments, from about 1 wt.% to about 30 wt.% of glycine is loaded. In other or the same embodiments herein, from more than 2 wt. % to less than 28 wt.%. In other embodiments, more than 3 wt. % to less than 25 wt.% of glycine is loaded. In other embodiments, more than 4 wt.% to less than 20 wt.% of glycine is mixed. In other embodiments, more than 5 wt.% to less than 15 wt.% of glycine is mixed. In one embodiment, the glycine is loaded at 10 wt.%.

### C. Other Additives

In addition to incorporating glycine, one or more embodiments of the present invention may include mixing at least one additive with the glycine and the at least one polyamide-producing monomer. The additive may be water to help catalyze or speed up the process. This water may also be termed "advantageous water" added in low concentrations. The water may be added prior to or during polymerization, wherein the glycine and water is then polymerized with the at least one polyamide-producing monomer *in situ* to provide a polyamide matrix wherein the glycine and the at least one additive remains substantially uniformly dispersed in the resulting polyamide matrix to form the biodegradable polyamide-based composition.

In one or more embodiments, from about 0.01 wt.% to about 10 wt.% of water is added. In other or the same embodiments herein, from more than 0.1 wt. % to less than 8 wt.%. In other embodiments, more than 0.5 wt. % to less than 5 wt.% of water is loaded. In other embodiments, more than 1 wt.% to less than 4 wt.% of water is mixed. In other embodiments, more than 2 wt.% to less than 3 wt.% of water is mixed. In one embodiment, the water is loaded at 1 wt.%. In one or more embodiments, the composition of the present invention is substantially devoid of added water. Alternatively, other acids or bases in low concentrations may also be used to catalyze the reaction.

### D. Methods

The biodegradable polyamide-based composition made from *in situ* polymerization of at least glycine with at least one polyamide-producing monomer and optionally water or other catalyzer can be formed into any desired product by any of a number of different methods. For example, in some embodiments either the same or different from the above embodiments, the product is formed by extruding the biodegradable polyamide-based composition into an extruded product such as a line or filament with desired diameter. In other embodiments the same or different from above embodiments, the product is formed by compounding the biodegradable polyamide-based composition into a compounded product. In still other embodiments the same or different from above embodiments, the product is formed by casting the biodegradable polyamide-based composition into a casted product. In yet other embodiments the same or different from above embodiments, the product is formed by molding the biodegradable polyamide-based composition into a molded product. And in still other embodiments the same or different from other embodiments, the product is formed by thermoforming the polyamide-based composition into a thermoformed product. Notably, in each of the formation of product embodiments above, all of the resultant products have higher biodegradability than a product substantially devoid of glycine. Thus, a biodegradable polyamide-based composition of the present invention can be formed into a line or filament. In more particular embodiments, the biodegradable polyamide-based composition is formed into filament for trimmer line applications. The resultant products have inherent biodegradability to the extent that they biodegradable including microbial degradation in which microorganisms such as fungi and bacteria consume the material. Notably, in each of the formation of product embodiments above, all of the resultant products have higher biodegradability than a product substantially devoid of glycine.

One aspect of the present invention may be achieved by a method for the melt reaction of a biodegradable polyamide-based composition, wherein a bioactive ingredient is substantially uniformly dispersed within a polyamide matrix that forms the biodegradable polyamide-based composition. By the term "substantially uniformly dispersed," it is meant that the bioactive ingredient is substantially homogenously dispersed throughout the polyamide matrix. One aspect of the present invention may be achieved by a method for the melt reaction of a polyamide-based composition, wherein glycine (or other component such as amino acid) is substantially uniformly dispersed within a polyamide matrix that forms the biodegradable polyamide-based composition.

In other or the same embodiments, the biodegradable polyamide-based composition may be formed into monofilament, typically by well known extrusion methods. In other or the same embodiments, the product may be formed into at least two twisted or braided strands. In other or the same embodiments, the product may be formed into a single layer film. In other or the same embodiments, the product may be formed into a multilayer film having at least two layers. In other or the same embodiments, the product may be formed into a molded part, such as by using known molding techniques. In other or the same embodiments, the product may be formed into a formed part by methods well known in the art. In other or the same embodiments, the product may be formed into a powder coating. And in other or the same embodiments, the product may be formed into a spray coating.

Any known monomer suitable for producing a polyamide when polymerized may be used in the present invention described above. In some embodiments of the present invention, the at least one polyamide-producing monomer may be selected from caprolactam, 11-amino undecanoic acid, and laurolactam so as to produce nylon 6, nylon 11 and nylon 12, respectively. In other embodiments, the at least one polyamide-producing monomers includes at least two monomers wherein hexamethylenediamine (HMD) is reacted with an acid selected from adipic acid (to produce nylon 6,6), azelaic acid (to produce nylon 6,9), sebacic acid (to produce nylon 6,10), and dodecanedioic acid (to produce nylon 6,12). In other embodiments, the polyamide-producing monomers may be made into polyamide copolymers by the addition of caprolactam (or lauralactam, where nylon 12 is desired as one of the blocks) with the hexamethylenediamine and one of the acid above. Such copolymers would include nylon 6/66 (with adipic acid), nylon 6/69 (with azelaic acid), nylon 6,/610 (with sebacic acid) and nylon 6/612 (with dodecanedioic acid). In still another embodiment, caprolactam may be copolymerized with laurolactam to produce nylon 6/12. In the present invention, any diamine can essentially be added with any diacid to produce a polyamide matrix suitable for the present invention. Likewise, at least one polyamide-producing monomer can be selected from any number of diamines (typically at least one) and any number of diacids (typically at least two) sufficient to produce a polyamide copolymer. In one embodiment, the at least one polyamide-producing monomer is caprolactam.

In one or more embodiments herein of the present invention, the bioactive ingredient is an amino acid. In one or more embodiments herein of the present invention, the amino acid is glycine. In other or the same embodiments herein, more than 1 wt.% of glycine is loaded or mixed with the polyamide-producing monomer. In other embodiments, from about 1 wt.% to about 30 wt.% of glycine is loaded. In other or the same embodiments herein, from more than 2 wt. % to less than 28 wt.%. In other embodiments, more than 3 wt. % to less than 25 wt.% of glycine is loaded. In other embodiments, more than 4 wt.% to less than 20 wt.% of glycine is mixed. In other embodiments, more than 5 wt.% to less than 15 wt.% of glycine is mixed. In one or more preferred embodiments, more than 2.5 to less than 5 wt.% glycine is loaded. In one embodiment, the glycine is loaded at 2.5 wt.%. In one embodiment, the glycine is loaded at 5 wt.%.

In one embodiment, the method for preparation of a biodegradable polyamide-based composition described above comprises first mixing more than 2 weight percent glycine and at least one polyamide-producing monomer to form a suspension wherein the glycine is substantially uniformly dispersed therein, and then polymerizing the at least one polyamide-producing monomer with the glycine substantially uniformly dispersed *in situ* to provide a polyamide matrix wherein the glycine remains substantially uniformly dispersed in the resulting polyamide matrix to form the biodegradable polyamide-based composition. The present invention requires that the glycine be added prior to polymerization of the polyamide-producing monomer to form a polyamide matrix.

In one or more embodiments, a biodegradable polymer matrix comprising 75 wt.% caprolactam and 25 wt.% glycine (75/25 capro/glycine) is made according to the present invention. In other or same embodiments, a biodegradable polymer matrix comprising 85 wt.% caprolactam and 15 wt.% glycine and (85/15 capro/glycine) is made according to the present invention. In yet other embodiments, a biodegradable polymer matrix comprising 95 wt.% caprolactam and 5 wt.% glycine and (95/5 capro/glycine) is made according to the present invention. In still other embodiments, a biodegradable polymer matrix comprising 97.5 wt.% caprolactam and 2.5 wt.% glycine and (97.5/2.5 capro/glycine) is made according to the present invention.

To determine biodegradability, sheets or films of the polyamide composition of the invention were exposed to a typical outdoor lawn vegetation surface to mimic the conditions of a trimmer product. Viscosity over time was measured. A significant drop of approximately 50% in viscosity was observed after 4 months outdoor exposure for a 5% glycine/95% caprolactam polymer.

Data on tensile properties of comparative samples containing no glycine and non-exposed inventive samples including glycine were measured and recorded on Table 2. Sample 1 comprised 95 wt.% caprolactam and 5 wt.% glycine (95/5 capro/glycine) while Sample 2 comprised 97.5 wt.% caprolactam and 2.5 wt.% glycine (97.5/2.5 capro/glycine).

**Table 2:**

| | Comparative 1 0% glycine | Sample 1 95% capro/5% glycine | Comparative 2 0% glycine | Sample 2 97.5% capro/ 2.5% glycine |
|---|---|---|---|---|
| Tensile Strength (psi) | 9,600 | 8,000 | 7,500 | 7,579 |
| Ultimate Elongation (%) | 300+ | 92 | 568 | 272 |
| Flexural Modulus (psi) | 140,000 | 157,000 | 100,000 | 116,000 |
| Notched Impact (ft lbs/in) | 2.9 | 1.6 | 2.1 | 3.5 |

Typically, ASTM industry-standard methods may be used to test biodegradability. Biodegradable polyamide compositions of the invention may be tested and proved as biodegradable and safe for the environment by one or more of the following ASTM methods: (1) ASTM D5209 "Standard Test Method for Determining the Aerobic Biodegradation of Plastic Materials in the Presence of Municipal Sewage Sludge"; (2) ISO 14855 / ASTM D5338 "Standard Test Method for Determining Aerobic Biodegradation of Plastic Materials under Controlled Composting Conditions"; and (3) ASTM 5511 "Standard Test Method for Determining Anaerobic Biodegradation of Plastic Materials Under High-Solids Anaerobic Digestion Conditions".

Biodegradable polyamide compositions of the present invention will typically biodegrade in home composting, commercial composting, landfills, buried in, or in contact with the soil, erosion/agricultural netting & film, and litter. The biodegradable polyamide compositions of the present invention will not degrade in warehouses, on store shelves, or in homes or offices.

In order to demonstrate practice of the invention and in order to show that the biodegradable polyamide compositions of the present invention will not degrade in warehouses, on store shelves, or in homes or office, further testing was done. A set of trimmer line made from the biodegradable polyamide composition of the present invention was placed outdoors and in contact with the ground in an exposed environment (i.e., the exposed, outdoor trimmer line), while a different set of trimmer line made from the biodegradable polyamide composition (i.e., indoor trimmer line) of the present invention was placed indoors in a warehouse in similar heat and humidity conditions as the exposed, outdoor trimmer line. The only difference between the two environments is that one was placed outdoors and the other was placed indoors. Both sets of trimmer lines were left in the same positions for one year, and after that year had passed, each set of trimmer line was tested to determine the degree of loss in trimmer performance for each sample. Trimmer performance was measured as the amount of trimmer line needed to cut a given area. The amount of trimmer line needed to trim the given area was measured in inches.

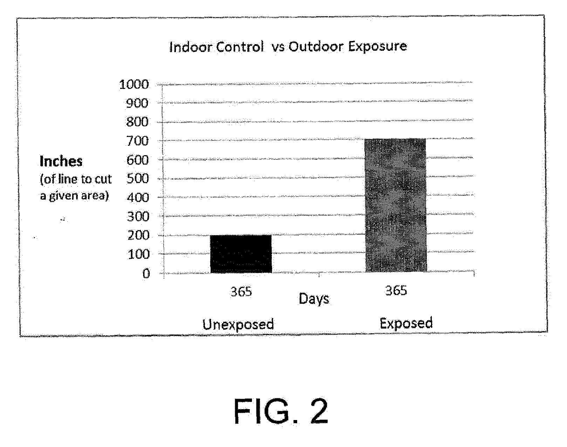

As Fig. 2 shows, a significantly larger amount of the exposed, outdoor trimmer line was needed to cut a given area as compared to the amount needed for the indoor trimmer line to cut a given area. This data shows that there was a significant decrease in the physical properties of the trimmer line that was placed outdoors as compared to the trimmer line that was placed indoors. This data also confirms that the biodegradable polyamide compositions of the present invention will biodegrade when contacted with the soil, erosion/agricultural netting & film, and/or litter, but will not degrade when kept in warehouses, on store shelves, or in homes or offices.

To further show the biodegradability of the polyamide composition of the present invention, injection molded bars and extruded trimmer lines were made from a glycine containing polyamide composition of the present invention. The injection molded bars and the extruded trimmer lines were exposed to a typical outdoor lawn vegetation surface. More specifically, the bars and trimmer lines were each made from a blend of 50/50 PA6 and 95/5 PA6/G (PA6 being nylon 6 and G being a glycine copolymer). These samples were then compared to control bars and trimmer lines made from nylon 6 without any glycine which are not a part of the invention.

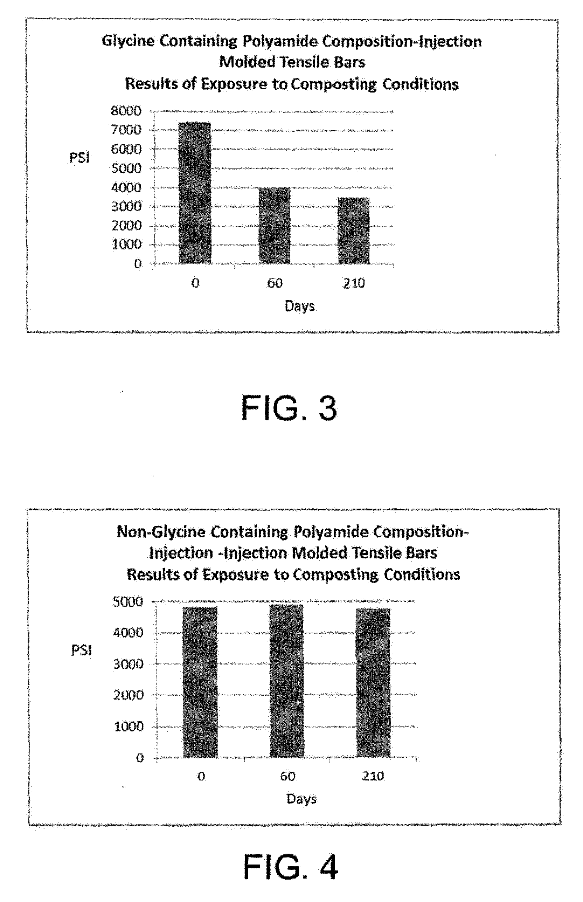

Both sets of bars were made according to ASTM D638. Both the present invention bars and the control bars were injection molded and exposed to composting material to simulate an environment in which the product was buried in a landfill. Another set of both the present invention bars and control bars were subjected to room temperature exposure in an indoor environment. Periodic testing of the materials was conducted to determine the degree of loss in tensile strength (psi) for each sample. As Fig. 3 and Fig. 4 show, there was a significant decrease in tensile strength for the samples which contained glycine, whereas there was an almost negligible change in the tensile strength for the non-glycine containing control bars.

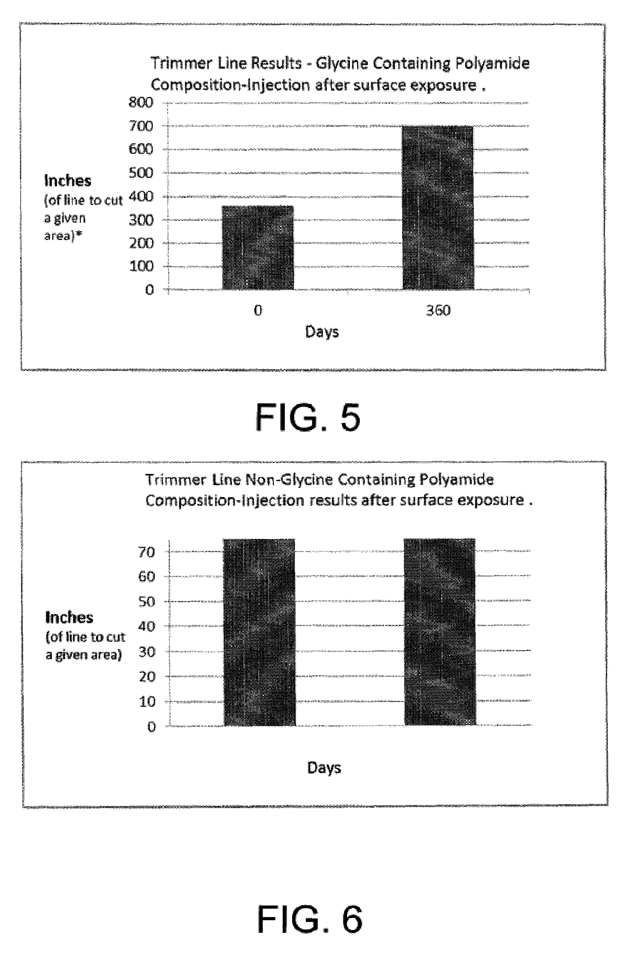

When testing the trimmer line, standard 0.095 inch trimmer line was produced. Again, one set was made with the glycine containing polyamide composition of the present invention while another set was made with the non-glycine containing polyamide control composition. In this instance, both sets of trimmer line were exposed to ground surface to simulate an environment in which the product was disposed on top of a lawn after use. Other sets of trimmer line based upon the samples of the present invention and based upon the control composition (i.e., without glycine) were subjected to room temperature exposure in an indoor environment. One year after exposure, each set of trimmer line was tested to determine the degree of loss in trimmer performance for each sample. Trimmer performance was measured as the amount of trimmer line needed to cut a given area. The amount of trimmer line needed to trim the given area was measured in inches. As Fig. 5 and Fig. 6 show, there was a significant loss of trimmer performance for the glycine containing trimmer line, whereas there was an almost a negligible loss in trimmer performance for the non-glycine containing trimmer line.

These results show that the inclusion of glycine to the backbone of a caprolactam polymerized copolymer of nylon 6 results in a significant decrease in the physical properties of both injection molded parts and extruded trimmer line products when exposed to the environmental conditions present in the soil. The results therefore show that the polyamide composition of the present invention can provide an environmentally friendly, biodegradable polymer that will naturally breakdown on its own over time.

Various modifications and alterations that do not depart from the scope and spirit of this invention will be apparent to those skilled in the art. This invention is not to be duly limited to any illustrative embodiments set forth herein.

In light of the foregoing, it should thus be evident that the method and composition of the present invention substantially improves the art. The method of the present invention provides for the *in situ* polymerization at least one polyamide-producing monomer with glycine and, optionally, water or other additives, to yield a biodegradable polyamide matrix in which the glycine is uniformly dispersed throughout the polyamide matrix. Advantageously, the biodegradable polyamide materials of certain embodiments have been shown to have high biodegradability.

While, in accordance with the patent statutes, only the preferred embodiments of the present invention have been described in detail hereinabove, the present invention is not necessarily to be limited thereto or thereby. Rather, the scope of the invention shall include all modifications and variations that fall within the scope of the attached claims.

## Claims

1. A method for the preparation of a biodegradable polyamide-based composition comprising glycine substantially uniformly dispersed into a polyamide matrix, the method comprising:
first mixing more than 2 weight percent glycine, at least one polyamide-producing monomer, and optionally water or other additives, to form a suspension wherein the glycine is substantially uniformly dispersed therein;
then polymerizing the at least one polyamide-producing monomer with the glycine substantially uniformly dispersed *in situ* to provide a polyamide matrix wherein the glycine remains substantially uniformly dispersed in the resulting polyamide matrix to form the biodegradable polyamide-based composition.

2. The method according to claim 1, wherein the step of mixing comprises:
first mixing the at least one polyamide-producing monomer with water to form a reaction mixture and then adding glycine to the reaction mixture to form a suspension before commencement of polymerization.

3. The method according to claim 1, wherein the step of mixing comprises:
first mixing the glycine with water to solubilize the glycine to form a glycine/water mixture, and then mixing the at least one polyamide-producing monomer with the glycine/water mixture to form a suspension before commencement of polymerization.

4. The method according to any of the preceding claims, wherein the at least one polyamide-producing monomer is selected from caprolactam, 11-amino undecanoic acid, laurolactam, or mixtures thereof.

5. The method according to any of the preceding claims, wherein the at least one polyamide-producing monomer is selected from hexamethylenediamine and a second polyamide-producing monomer is selected from adipic acid, azelaic acid, sebacic acid, and dodecanedioic acid.

6. The method according to any of the preceding claims, wherein the at least one polyamide-producing monomer is selected from any number of diamines and any number of diacids sufficient to produce a polyamide copolymer.

7. The method according to any of the preceding claims, wherein the glycine is crystalline.

8. The method according to any of the preceding claims, wherein the composition is substantially devoid of water or other additives.

9. The method according to any of the preceding claims, wherein the biodegradable polyamide-based composition is extruded to form a filament.

10. The method of claim 8, wherein the filament is biodegradable trimmer line.

11. A biodegradable nylon trimmer line extruded from a polyamide-based composition prepared by the method of claim 1.
